(19) Europäisches Patentamt
European Patent Office
Office européen des brevets

(11) EP 0 796 478 B1

(12) **EUROPEAN PATENT SPECIFICATION**

(45) Date of publication and mention
of the grant of the patent:
**24.01.2001 Bulletin 2001/04**

(21) Application number: **95933109.1**

(22) Date of filing: **15.09.1995**

(51) Int Cl.$^{7}$: **G07F 5/24**

(86) International application number:
**PCT/US95/11693**

(87) International publication number:
**WO 96/08795 (21.03.1996 Gazette 1996/13)**

(54) **MULTIPLE CURRENCY AUTOMATIC TRANSACTION SYSTEM AND METHOD**

VERFAHREN UND VORRICHTUNG FÜR AUTOMATISCHE TRANSAKTIONEN MITTELS
MEHRERER WÄHRUNGEN

SYSTEME ET PROCEDE DE TRANSACTION AUTOMATIQUE POUR DES MONNAIES MULTIPLES

(84) Designated Contracting States:
**AT BE CH DE DK ES FR GB IE IT LI LU NL PT SE**

(30) Priority: **16.09.1994 US 307256**

(43) Date of publication of application:
**24.09.1997 Bulletin 1997/39**

(60) Divisional application: **00203685.3 / 1 071 047**

(73) Proprietor: **MARS, INCORPORATED**
**McLean, Virginia 22101-3883 (US)**

(72) Inventors:
• **DOBBINS, Bob, M.**
**Villanova, PA 19085 (US)**

• **CAMPBELL, Bernard, Joseph**
**Sherfield on Loddon, Hampshire RG27 0ED (GB)**

(74) Representative: **Musker, David Charles et al**
**R.G.C. Jenkins & Co.**
**26 Caxton Street**
**London SW1H 0RJ (GB)**

(56) References cited:
**DE-A- 2 323 977      DE-A- 2 323 978**
**DE-A- 3 008 667      GB-A- 2 017 370**
**US-A- 4 953 086**

EP 0 796 478 B1

## EP 0 796 478 B1

**Description**

Field of the Invention

The invention relates to automatic transaction systems for dispensing products or performing services, and more specifically, to automatic transaction systems which accept multiple currencies.

Background of the Invention

Consumer convenience is a major concern in using automatic transaction systems, such as vending machines. Many travellers at airports or near international borders often do not have the local currency. As a consequence, a purchase of a product or service from an automatic transaction system at these locations would be impossible without first exchanging currency. This results in delays, and often currency conversion would not be possible due to the hour of the day. In such an instance, a customer may be unable to purchase an item he wanted and, correspondingly, a sale of that item may be lost.

Conventional money exchanging machines, such as that described in U.S. Patent No. 4,953,086, exchange bills between two currencies using a simple multiplication exchange rate conversion. However, there are unique problems associated with automatic transaction systems which are not addressed or solved by money exchanging machines. One problem is the limited ability of conventional automatic transaction systems to pay change. Change paid out by conventional automatic transaction systems is typically in specific denominations of a local currency. Another problem is the limited pricing flexibility of the items offered for sale. Conventional transaction systems often restrict the prices of items to a minimum increment value of the local currency. A typical minimum increment on automatic transaction systems is greater than unity, for example, U.S. 5 cents on most U.S. vending machines.

These problems present difficulties in using the simple multiplication conversion rate of the money exchanging machines in automatic transaction systems. For example, if the conversion ratio between the U.S. and Canadian currencies is 1:1.20, the conversion of Canadian to U.S. currencies for use on U.S. transaction systems would be: CAN $0.05 = US $0.42; CAN $0.10 = US $0.083; CAN $0.25 = US $0.208; CAN $1.00 = US $0.833. These resulting values in U.S. dollars do not lend themselves to transaction systems having items priced and change given in US 5 cents increments. Further, components of the conventional money exchanging machines, such as that described in U.S. Patent No. 4,953,086, are often too complex and expensive for use in automatic transaction systems.

Therefore, there is a need for an automatic transaction system which accepts payment in multiple currencies and performs exchange rate conversions which facilitate establishing credit amounts and paying change in particular denominations of a base currency.

DE-A-2 323 977 discloses a coin telephone which accepts payments in claims of a local currency and also coins in a foreign currency. The value of foreign coins is converted using an exchange rate.

US-A-4 953 086 discloses a money exchanging machine for converting money of one currency into money of another currency.

Summary of the Invention

The invention provides a currency handling apparatus as set out in claim 1.

The invention also provides a multiple currency automatic transaction system as set out in claim 7.

The invention also provides a method of performing a transaction using a multiple currency automatic transaction system as set out in claim 8.

A multiple currency automatic transaction system employs a conversion technique to translate payment made in denominations of particular currencies to credit amounts in a base or a reference currency. An advantage of this automatic transaction system is the convenience provided to customers due to the acceptance of multiple currencies.

A feature of one embodiment of the present invention is the utilization of a conversion technique that produces credit amounts and permits payment of change as a multiple of a minimum denomination of the base currency.

An embodiment of the invention has the following features. The multiple currency automatic transaction system includes an item selector to allow a customer to select an item offered by the system and a currency acceptor that can detect unique characteristics of inserted denominations of at least first and second currencies. A controller receives information signals from the currency acceptor and the item selector. The controller maintains credit amounts of deposited currency in increments of the base currency, or in an alternative embodiment, a reference currency. The controller converts deposited denominations of the alternate currency to corresponding credit amounts of the base currency based on a conversion rate. The controller further transmits a dispense signal to an item dispenser to dispense a selected item if the credit amount is equal to, or exceeds, the selected item's cost. A conversion rate data entry device is also connected to the controller to permit the entry and updating of the conversion rate by service personnel.

One suitable conversion technique for converting values of deposited alternate currency denominations into credit values of the base currency is to translate the deposited amount into a base currency value based on an exchange rate. This translated value is then rounded down to the nearest multiple of a minimum denomination of the base currency accepted by the system. In this manner, the automatic transaction system establishes credit and pays change in appropriate denominations of the base currency independent of the deposited acceptable currency type, or combination of acceptable currency types.

The above-discussed features, as well as additional features and advantages of the present invention, will become more readily apparent by reference to the following detailed description and the accompanying drawings.

Brief Description of the Drawings

FIG. 1 is a front view of a multiple currency automatic transaction system according to an embodiment of the present invention;

FIG. 2 is a partial cut-away side view of the multiple currency automatic transaction system of FIG. 1;

FIG. 3 is a cut-away front view of a coin mechanism of the multiple currency automatic transaction system of FIG. 2;

FIG. 4 is a cut-away side view of a bill validator of the multiple currency automatic transaction system of FIG. 2;

FIG. 5 is a schematic block diagram of electrical components of the multiple currency automatic transaction system of FIGS. 1 and 2;

FIGS. 6 and 7 illustrate a method of operation of the multiple currency automatic transaction system of FIGS. 1 and 2; and

FIG. 8 is a flow chart showing a coin routing method which may suitably be employed by the coin mechanism of FIG. 3.

Detailed Description

The multiple currency automatic transaction system and method of embodiments of the present invention may be used for the dispensing of items including the vending of products, such as drinks, snacks, cigarettes, toiletries or tickets, and the providing of services, such as in pay telephones or turnstiles. This system may be used at border regions, international airports and other locations where at least two different currencies may be prevalent. The present invention provides a convenience over prior art systems because a customer no longer has to experience the delays or fail to purchase an item due to a lack of local currency. The invention is described below with reference to a transaction system for the vending of products, which is not meant to be a limitation on the application of this invention.

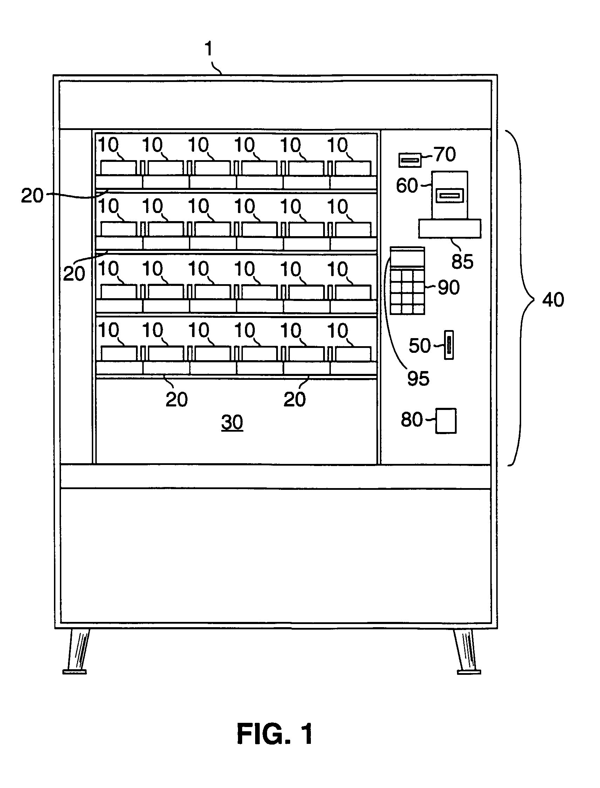

A multiple currency automatic transaction system 1 according to one embodiment of the present invention is shown in FIG. 1. Referring to FIG. 1, the automatic transaction system 1 includes a variety of products 10 to be dispensed which are stored in an area inaccessible to customers, such as behind a glass panel. Each product 10 is retained by a product delivery apparatus 20 which is selectively actuatable to dispense the product into a delivery area 30 that is accessible to the customer. Suitable product delivery apparatus 20 include vend motors and solenoids as well as others well known in the art. Examples of such apparatus include those described in U.S. Patent Nos. 4,458,187 and 4,785,927, assigned to the assignee of the present invention.

A control panel 40 of the automatic transaction system 1 contains a coin slot 50 and a banknote or bill insert slot 60 which accept currency to initiate a vend operation. The control panel 40 further contains a card acceptor 70 to enable customers to initiate a transaction with credit or debit cards. In addition, an electronic purse device in the form of a card may be inserted into the card acceptor 70 to initiate a transaction. The term "electronic purse device" is used herein to denote a token or card possessing an electronic circuit, a magnetic strip or other data storing medium or circuitry, for retaining a credit value of a particular currency. An electronic purse device may be in one of a variety of shapes, including a key or coin, as well as the card. Such devices may be used as currency in a variety of conventional automatic transaction systems.

A coin return 80, a bill payout recess 85 and an item selector such as a keypad 90 are also provided in the control panel 40. A display 95 on the control panel 40 may provide instructions and information to the customer. Suitable displays 95 include dot-matrix displays, selectively activatable message lights or other displays capable of operating in the environmental conditions to which automatic transaction systems are typically exposed.

A customer may initiate a transaction by depositing coins or bills of particular denominations of a base or alternate currencies in the slots 50 or 60, respectively. The customer may also insert an electronic purse device, or a debit or credit card in the card acceptor 70 to initiate a transaction. Once sufficient payment has been deposited in the automatic transaction system 1, the customer may select a product 10 to be dispensed using the keypad 90. The corresponding product delivery apparatus 20 will then dispense the selected product 10 to the product delivery area 30 where it may be retrieved by the customer. Any resulting change from the transaction may be paid out through the coin return 80, the bill payout recess 85 or credited to an inserted electronic purse device.

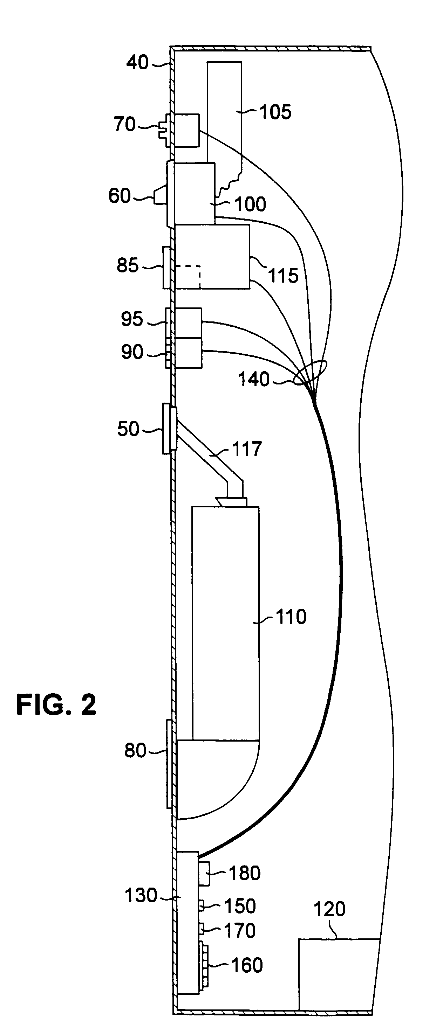

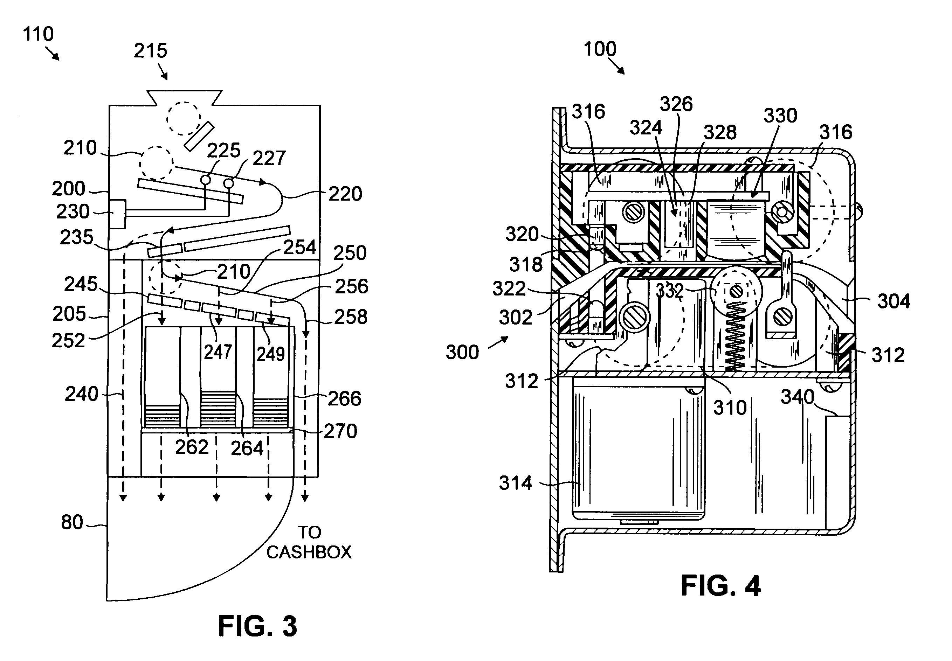

FIG. 2 is a partial cutaway side view, not drawn to scale, of the automatic transaction system 1 showing a typical component layout along the control panel 40. Referring to FIG. 2, the automatic transaction system 1 employs currency acceptors, such as a bill validator 100 and a coin mechanism 110 which are attached to the rear of the control panel 40 adjacent the bill insert and coin slots 60 and 50, respectively. The coin mechanism 110 is connected to the coin return 80 and to a coin passageway 117 leading to the coin slot 50. The bill validator 100 is connected to a bill stacker 105. The coin mechanism 110 and bill validator 100 are capable of discriminating coins and bills of at least two different currencies and are discussed in greater detail below with respect to FIGS. 3 and 4, respectively.

A bill escrow and payout unit 115 is positioned adjacent the bill payout recess 85 and is connected to the bill validator 100. The bill escrow and payout unit 115 is capable of dispensing bills of at least one particular base currency denomination as change through the bill payout recess 85. The bill validator 100 may divert deposited acceptable bills of the particular base currency to the bill escrow and payout unit 115 to replenish its supply of bills for change. Suitable bill escrow and payout units 115 include those disclosed in U.S. Patent No. 5,076,441, as well as others well-known in the art. A cash box 120 is also included in the automatic transaction system 1.

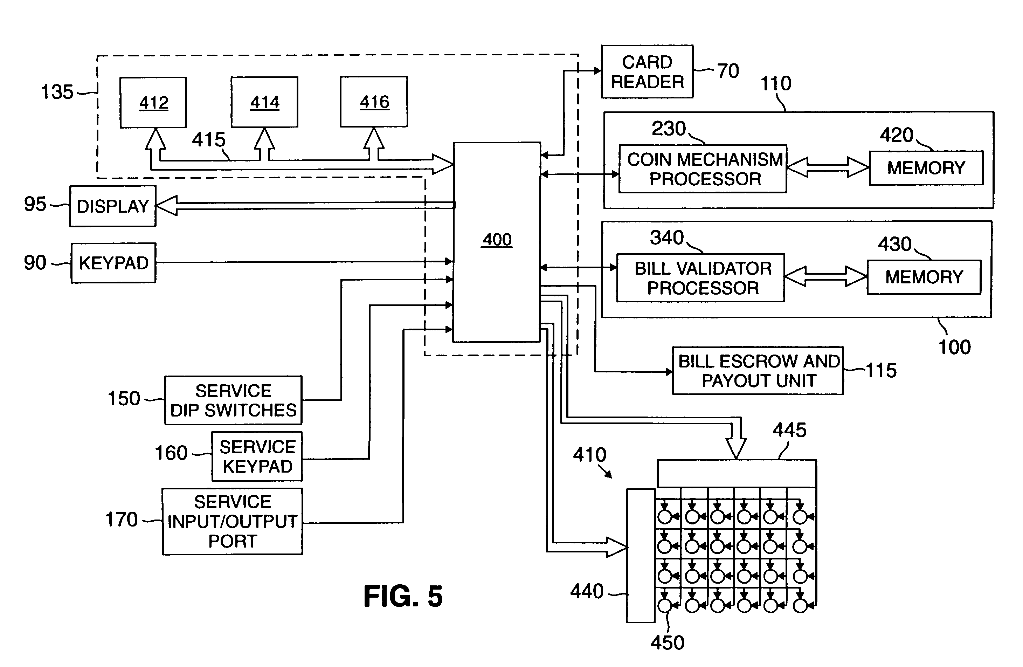

The bill validator 100, coin mechanism 110, bill escrow and payout unit 115, card acceptor 70, keypad 90 and display 95 are connected to a vend controller 130 by communication lines 140. The controller 130 is further connected to data entry devices, such as DIP switches 150, a keypad 160, an input/output port 170, as well as a display 180 to facilitate entering and updating of conversion rates and servicing of the automatic transaction machine 1. A more detailed description of the controller 130 is provided below with respect to FIG. 5. The components disposed behind the control panel 40 are not accessible to customers of the automatic transaction system 1 and may only be accessed by service personnel.

Any coin mechanism capable of validating coin denominations of at least two currencies may be used as the coin mechanism 110 in FIG. 2. In the alternative, an automatic transaction system 1 may utilize multiple coin mechanisms, wherein each coin mechanism is capable of validating coins from a respective currency coin set. The details of one suitable coin mechanism 110 are illustrated in FIG. 3. Coin mechanism 110 consists of a coin validator 200 and a coin separator 205. Referring to FIG. 3, the coin validator 200 receives inserted coins 210 through an opening 215 which is connected to the coin passageway 115 of FIG. 2. The coin 210 travels along a path 220 in the coin validator 200 past two sensors 225 and 227.

The sensors 225 and 227 generate electrical signals which are provided to a coin mechanism processor 230 such as a microprocessor or microcontroller. The processor 230 is also connected to the vend controller 130 via communications lines 140 of FIG. 2. The electrical signals generated by the sensors 225 and 227 contain information corresponding to the measured characteristics of the coin, such as the coin's diameter, thickness, metal content and electromagnetic properties. Based on these electrical signals, the processor 230 is able to discriminate whether the coin is acceptable, and if so, the denomination of the coin 210 and the currency type, i.e., its country of origin. The coin mechanism processor 230 provides information concerning the currency type and denomination of accepted coins to the controller 130 over the communication lines 140 of FIG. 2. Suitable arrangements for sensors 225 and 227 include those described in U.S. Patent Nos. 3,870,137 and 4,361,218, assigned to the assignee of the present invention.

If the coin 210 is unacceptable, the processor 230 controls a gate 235 to direct the unacceptable coin 210 to a reject chute 240. The reject chute 240 is connected to the coin return 80 of FIGS. 1 and 2. In the alternative, acceptable coins 210 are directed to the coin separator 205 by the gate 235. The coin separator 205 may have a number of gates 245, 247, 249, also controlled by signals from the processor 230 for diverting the coin 210 from a main path 250. The coin 210 may be diverted into respective paths 252, 254 and 256, or the coin 210 may be allowed to proceed along path 250 to a path 258 leading to the cash box 120.

Each of the paths 252, 254 and 256 leads to a respective one of three coin tubes or containers 262, 264 and 266. Each of these coin tubes 262-266 is arranged to store a vertical stack of coins of a particular denomination and currency. Although only three containers are shown, any number may be provided. Further, the coin mechanism 110 may utilize passive routing techniques, such as those well known in the U.S. vending machine art, instead of the gates 245-249 for diverting the coin 210 from the path 250. Examples of suitable alternative configurations for the coin separator 205 are described in U.S. Patent Nos. 3,844,297 and 4,106,610, assigned to the assignee of the present invention.

A dispenser 270 associated with the coin tubes 262-266 is operable to dispense coins from the containers when change is to be given by the coin mechanism 110. The dispensed coins are delivered to the coin return 80. Suitable dispensers 270 include those described in U.S. Patent Nos. 3,814,115 and 4,367,760, assigned to the assignee of the present invention. An alternative configuration of the present invention may use a coin mechanism 110 that does not payout change. In such a configuration, a separate pre-loaded coin payout device, such as those well known in the gaming machine arts, may be utilized to payout change.

Any bill validator that is capable of discriminating unique characteristics of bill denominations of at least two currencies may be used as the bill validator 100 of FIG. 2. In the alternative, an automatic transaction system 1 may employ multiple bill validators, wherein each bill validator is capable of validating bills from a respective currency set. Suitable bill validators 100 include those described in U.S. Patent Nos. 4,628,194 and 5,222,584, which are also assigned to the assignee of the present invention.

FIG. 4 depicts the details of one suitable bill validator 100. Referring to FIG. 4, the bill validator 100 contains a bill passageway 300 having an entry 302 and an exit 304. Disposed on either side of the bill passageway 300 are two continuous track belts 310 which are supported by parallel rollers 312. The rollers are operably connected via a series of gears (not shown) to a motor 314. The motor controlled belts 310 act to advance a bill through the passageway 300 in a forward direction (from left to right in FIG. 4). The motor 314 is reversible so that it can drive belts 310 in an opposite direction, reversing the direction of travel of the bill. Positioned directly above each belt 310 is a set of wheels 316 which further assist the inserted bill in advancing through the passageway 300.

Adjacent the entry 302 is an optical sensor 318 consisting of an optical transmitter 320 and an optical receiver 322 disposed on opposite sides of the bill passageway 300. Interruption of a light beam travelling from the transmitter 320 to the receiver 322 will cause the receiver to generate a signal indicating the presence of a bill in the passageway entry 302.

A reflective sensor 324 is located directly above the approximate center of the passageway 300 and consists of a second optical transmitter 326 and a second optical receiver 328 which are both located in close proximity on the same side of the passageway 300. The reflective sensor 324 is positioned to detect and respond to the presence or absence of optical information on a bill positioned in the passageway 300. If the surface of the bill directly beneath the reflective sensor 324 is relatively reflective, such as the unprinted areas of U.S. banknotes, then the light emitted by the transmitter 326 will be reflected by the bill surface onto the receiver 328. Conversely, if the surface is not reflective then little light will be reflected onto the receiver 328. Suitable optical sensors for sensing U.S. banknotes include red, green and infra-red light sensors. In an alternative embodiment, an optical sensor may comprise a transmitter and receiver disposed on opposite sides of the passageway 300 to obtain information concerning the light transmission characteristics of inserted bills.

Adjacent the reflective sensor 324 is a magnetic sensor 330, which generates an electric signal in response to the presence of magnetic information on the surface of the bill beneath the sensor 330. Positioned beneath the magnetic sensor 330 is a pinch wheel 332 which is spring biased against the magnetic sensor 330 to press the inserted bill against the magnetic sensor 330 ensuring accurate detection of magnetic information on the bill.

The reflective sensor 324 and the magnetic sensor 330 provide electrical signals to a bill validator processor 340, such as a microprocessor or microcontroller. The electrical signals correspond to optical and magnetic information detected from the bill. Based on these electrical signals, the processor 340 is able to discriminate whether the bill is acceptable, and if so, the currency type and denomination of the bill. If a bill is unacceptable, the motor 314 is reversed and the bill is returned to the customer. Otherwise, if a bill is acceptable, it is diverted to the bill stacker 105 or to the bill escrow and payout unit 115. The processor 340 provides information concerning the bill's currency type and denomination to the vend controller 130 over the communication lines 140 of FIG. 2. An alternative configuration of the present invention may use a bill validator 100 that only stacks accepted bills in the stacker 105 or provides such bills to the cash box 120. In such a system, a separate pre-loaded bill payout device controlled by the vend controller 130, may be utilized to payout change.

FIG. 5 is a simplified block diagram showing electrical connection of elements of one suitable vend controller 130 with the various system components shown in FIG. 2. Similar components in FIGS. 2 and 5 are like numbered for clarity, for example, the display 100 and the card acceptor 70. In FIG. 5, the components contained in the transaction controller 130 of FIG. 2 are depicted within a dashed outline 135 and include a processor, such as a microprocessor 400 connected to memories 412, 414 and 416 via data and address lines 415. Alternative suitable processors for the controller 130 include microcontrollers, programmable logic arrays and application specific integrated circuits.

The memories 412, 414 and 416 may be random-access memory (RAM), read-only memory (ROM) and electronically erasable-programmable read-only memory (EEPROM), respectively. These memories may reside in one or more integrated circuit chips. The three memories 412, 414 and 416 are shown for exemplary purposes only. The present invention may include any number of application suitable memory types.

The microprocessor 400 communicates with a vend dispensing circuit 410, the service input/output port 170, the card acceptor 70, the bill payout device 115, and the processors 230 and 340 of the coin mechanism 110 and bill validator 100, respectively. The processors 230 and 340 are also shown connected to corresponding memories 420 and 430 within the coin mechanism 110 and bill validator 100. The memories 420 and 430 may be ROM, RAM or EEPROM type memories or a combination of memory types suitable to perform currency accepting operations. The microprocessor 400 also receives signals from the keypad 90, the service switches 150 and the service keypad 160. In addition, the microprocessor 400 provides display information to the display 95.

The microprocessor 400 executes program code stored in memory, such as the ROM memory 414, to control the operations of the automatic transaction machine 1. Conversion or exchange rate information, pricing information and other service data may be retained in the EEPROM memory 416. Intermediate or temporary data generated by the microprocessor 400 during a transaction may be retained in the RAM memory 412.

The processor 230 controls the operations of the coin mechanism 110 in the acceptance testing of coins, and the processor 340 controls the operations of the bill validator 100 in the validation of bills. During acceptance testing of a coin, the processor 230 receives information signals generated by the sensors 225 and 227 of FIG. 3. The processor 230 processes the received information by comparing it with acceptance criteria stored in the memory 420. In a similar manner, the bill validator processor 340 processes received information signals from the sensors 318, 324 and 330, shown in FIG. 4, by comparing it with bill acceptance criteria stored in the memory 430. The bill and coin acceptance criteria may consist of ranges of values corresponding to properties of valid accepted bill or coin denominations of the base and alternate currencies. One suitable arrangement of acceptance criteria is described in U.S. Patent No. 5,167,313 which is assigned to the assignee of the present invention.

The processors 230 and 340 provide data concerning the currency types and denominations of accepted coins and bills to the vend controller microprocessor 400. Based on this data, the microprocessor 400 computes the corresponding credit value in base currency units and controls the dispensing of a product by the vend dispensing circuit 410 if sufficient credit is available. The vend dispensing circuit 410 may be a vend dispensing circuits well known in the art, including the circuit described in U.S. Patent No. 4,785,927.

A typical vend dispensing circuit 410 includes a row selector 440 and a column selector 445 connected to each one of a plurality of vend motors 450. Each vend motor 450 is disposed in a respective one of the vend delivery apparatus 20, shown in FIG. 1. A product will be dispensed by the operation of the corresponding vend motor 450 that receives select signals simultaneously from both the row and column selectors 440 and 445. Each selector 440 and 445 is operable to select only one row and column at a time. The microprocessor 400 controls the row and column selectors 440 and 445 to select a vend motor 450 in a vend delivery apparatus 20 to dispense a product based on the selection made by the customer via the keypad 90.

In determining the available credit for a transaction, the microprocessor 400 converts the value of deposited denominations of acceptable alternate currencies into a credit value in a base currency units. The conversion rate used by the microprocessor 400 may be entered or updated by a service person having access to the rear of the control panel 40. The conversion rate may be updated or entered using data entry devices, such as the service switches 150, the service keypad 160 or input-output port 170 which permits uploading of the rate by use of a connected portable terminal. Although the automatic transaction system 1 is shown with three data entry devices any one or combination of these three devices may be used in a system 1 according to the present invention. In addition, the conversion rate may be entered by other data entry devices, such as an infra-red or other type optical link, or by a bar code reader with suitable prepared bar code labels, or a remote communication link including a modem link.

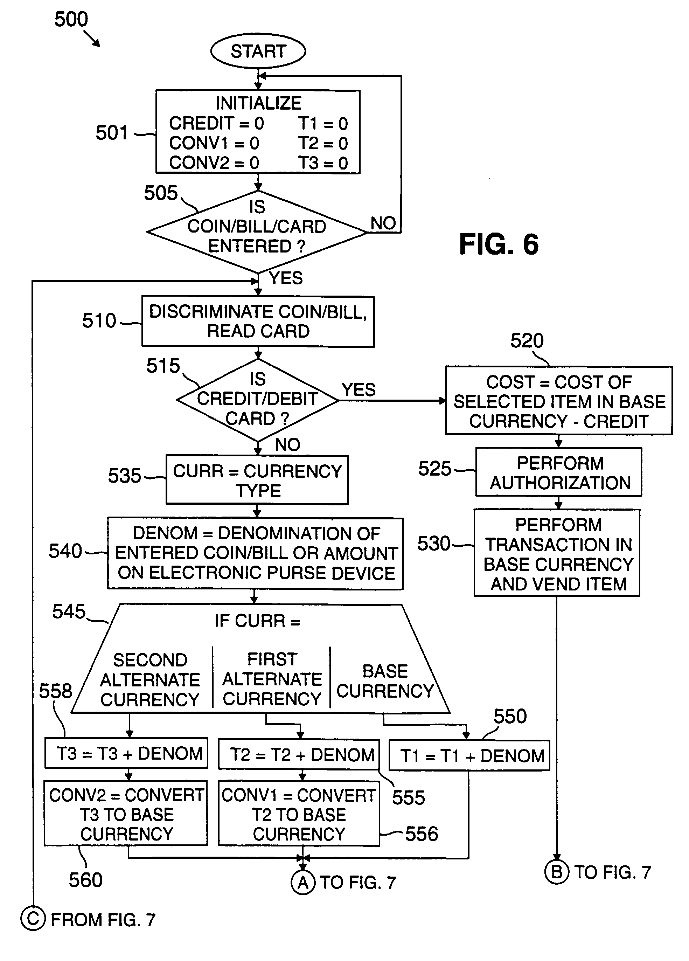

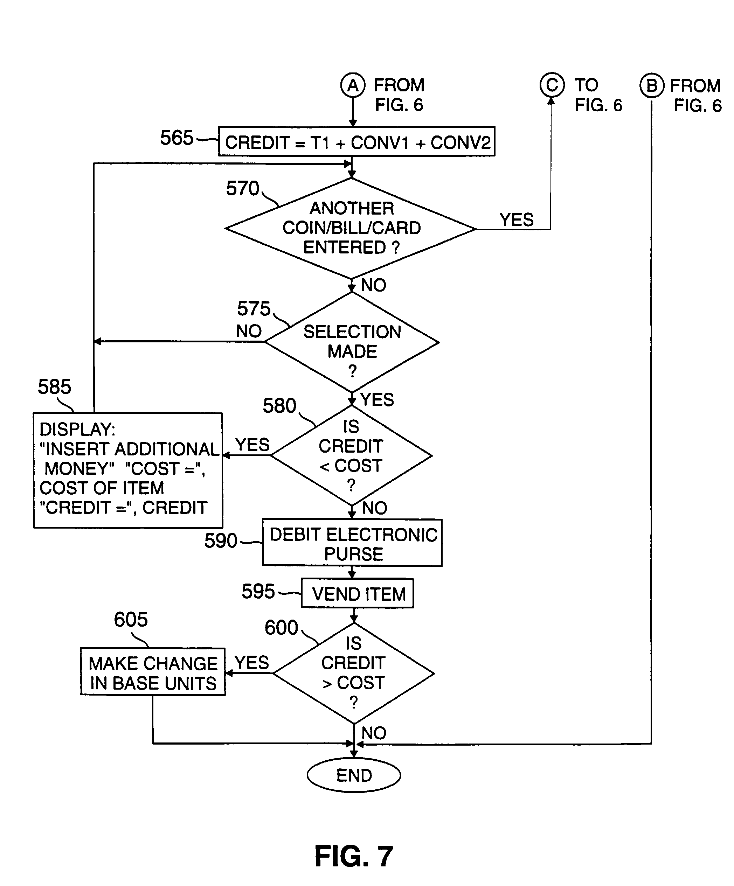

FIGS. 6 and 7 depict an exemplary method 500 for performing the operations of the multiple currency transaction system 1 that accepts denominations of three types of currencies for a transaction. The three currencies will be referred to as base, first alternate and second alternate currencies. Referring to FIG. 6, temporary values CREDIT, CONV1, CONV2, T1, T2 and T3 are initialized to zero in step 501. Then, in step 505, the system 1 waits for a customer to initiate a transaction by depositing currency or inserting a device or card in the card acceptor 70. If a transaction is not initiated, the method 500 repeats step 501. However, if a transaction is initiated, then the method proceeds to step 510.

In step 510, the respective coin mechanism 110 or bill validator 100 discriminates the deposited bill or coin to determine whether it is a valid acceptable denomination of the base or alternate currencies. Alternatively, in step 510, the card acceptor 70, shown in FIG. 2, will evaluate any inserted electronic purse device, or credit or debit card to determine if it may be used as currency in the transaction system 1. Invalid currency, cards or devices will be rejected and returned to the customer. The detected currency type and denomination of the deposited acceptable bill or coin, or the credit amount on the inserted electronic purse device are provided by the respective currency acceptor to the microprocessor 400 of FIG. 5.

Then, in step 515, if the deposited or inserted item is a credit or debit card, the method 500 proceeds to step 520 where the cost of a selected item is determined in base currency units less any credit previously existing in the system 1. The microprocessor 400 then seeks authorization for the transaction via communication with the credit or debit card supplier in step 525. After obtaining proper authorization, the automatic transaction system 1 performs the transaction in the base currency units and vends the selected product in step 530.

However, in step 515, if the deposited or inserted item was a coin, bill or electronic purse device, then the method 500 proceeds to step 535. In step 535, the microprocessor 400 defines a value CURR as the particular currency type of the deposited payment item based on the information received from the corresponding currency acceptor. In a similar manner, a value DENOM is defined, in step 540, as the denomination of the deposited bill or coin, or the amount credited on the electronic purse device.

Then, in step 545, the method 500 determines if the value CURR corresponds to the base currency or first or second alternate currencies. If the value CURR corresponds to the base currency, the method 500 proceeds to step 550 where the value T1, corresponding to the total amount of deposited base currency, is increased by the denomination value DENOM. However, if in step 545, it is determined that the value CURR corresponds to the first alternate currency, then the method 500 proceeds to step 555. In step 555, the value T2, corresponding to the total deposited amount of the first alternate currency, is increased by the denomination value DENOM. The total deposited first alternate currency value T2 is then converted to a value CONV1 in base currency units in step 556.

In a similar manner, if in step 545 it is determined that the value CURR corresponds to the second alternate currency, then the method 500 proceeds to step 558. In step 558, the value T3, corresponding to the total deposited amount of the second alternate currency, is increased by the denomination value DENOM. The total deposited second alternate currency value T3 is then converted to a value CONV2 in base currency units in step 560. Suitable conversion techniques for converting the values T2 and T3 are described in greater detail below.

After completing the step 550, 556 or 560, the method 500 proceeds to step 565 which is shown in FIG. 7. In step 565, the method 500 determines the credit value CREDIT representing the sum of the values T1, CONV1 and CONV2. The credit value CREDIT corresponds to the amount of credit in base currency units available for the transaction. Then, in step 570, the method 500 evaluates whether another coin, bill, card or device, has been inserted into the automatic transaction system 1. If another coin, bill or card, has been inserted, the method 500 proceeds to step 510 in FIG. 6 to discriminate the inserted item and increase the credit value CREDIT by performing steps 535-565, or complete a credit or debit card transaction by performing steps 520-530.

However, if no additional currency has been deposited, in step 570, the method proceeds to step 575. In step 575, the method 500 determines whether the customer has selected a product item. The customer may select an item using the input selector keypad 90 of FIGS. 1 and 2, which generates a selection signal to the microprocessor 400. In an alternative embodiment, the item selector may be buttons or switches corresponding to the respective products or services, or other devices that permit the customer to identify the desired item. If no selection has been made, the method 500 returns to step 570 to determine if another payment item has been inserted. However, if a selection has been made, the method 500 proceeds to step 580.

In step 580, the method 500 determines if the value CREDIT is less than the cost of the selected item. If the value CREDIT is less than the item cost, the method 500 proceeds to step 585 where the microprocessor 400 causes the display 95 to display a message indicating that additional currency needs to be inserted to purchase the selected item. After displaying the message, the method 500 returns to step 570 to determine if additional currency has been inserted. In the alternative, if the value CREDIT is determined to be greater than or equal to the item cost in step 580, the method 500 proceeds to step 590.

In step 590, if an electronic purse device has been inserted into the card acceptor 70, the cost value is debited from the card. Accordingly, if an inserted electronic purse device maintains credit in units of an alternate currency, the debited value will be the cost value converted from the base currency to units of an alternate currency which is described in greater detail below. Then, in step 595, the selected item is dispensed. After step 595, the method 500 proceeds to step 600 and determines if change has to be given, and dispenses such change in step 605. Change may be dispensed in coins by the coin mechanism 110 and/or bills by the bill escrow and payout unit 115 of FIG. 2. Change may also be applied as credit in the proper currency values to an electronic purse device.

In steps 556 and 560 of FIG. 6, the value of deposited first and alternate currencies are converted to base currency units. It is preferable that these conversions not merely be simple exchange rate multiplications since any corresponding change due must be based on a particular increment or denomination of the base currency. The particular increment is often greater than unity. For example, if an exchange rate multiplication conversion was used, a customer depositing CAN $2.00 in a U.S. transaction system using a conversion rate of 0.794 US/CAN would receive US $1.59 credit. Further, if that customer selected a product costing US $1.25, his change due would be US $0.34 which is not readily payable by an automatic transaction system 1 employing a minimum change increment of at least US $0.05.

Accordingly, it is preferable that the conversion be rounded to the smaller nearest multiple of a minimum increment of the base currency. Such a conversion can be achieved using the formula:

$$CONV = INT\left\{\frac{(T2 \ x \ xrate)}{baseInc}\right\} \ x \ baseInc,$$

where the value T2 is the value of the deposited second currency, the result CONV is the corresponding converted amount corresponding to the values CONV1 or CONV2 in steps 556 or 560, the value xrate is the exchange rate, and the value baseInc is the minimum base currency increment. The function INT{x} is the integer function which truncates any fraction portion of x. Therefore, in the above example, the value in U.S. currency of the deposited CAN $2.00 into a system 1 utilizing this conversion formula would be CONV = INT{(2.00 x 0.794/0.05} x 0.05 = 31 x 0.05 = US $1.55, assuming a minimum base currency increment of US $0.05. If the customer selected a product costing US $1.25, then he would receive a readily payable US $0.30 as change. Such change could be paid by controlling the dispenser 270 of FIG. 3 to dispense any proper combination of nickels, dimes and quarters if the coin tubes 262-266 contained such denominations.

In an alternative embodiment, the automatic transaction system 1 may perform a simple exchange rate multiplication conversion in either or both of steps 556 and 560, if a suitable change dispensing technique was employed in step 605 in FIG. 7. Such a change dispensing technique should pay a change amount equal in value to a multiple of the minimum base currency increment that does not exceed the difference of the credit and cost values. For example, in such a transaction system 1, the above recited transaction would yield a difference of the cost and credit values of US $0.34 (1.59 - 1.25). Correspondingly, if the minimum increment employed by the system 1 is US $0.05, the change paid would be US $0.30 (6 x 0.05), or the highest multiple of the minimum increment that does not exceed the credit or cost difference. A suitable formula for this change dispensing technique is

$$CHANGE = INT\left\{\frac{DIFF}{baseInc}\right\} \times baseInc,$$

where the value DIFF is the difference of the cost of the selected product and the credit value in base currency units determined by a simple exchange rate multiplication conversion. The resulting value CHANGE is the actual amount of change to be paid out. In an alternative embodiment, the function INT{} in this formula may be substituted with a rounding function to produce a system that may yield a slight reduction in profit per transaction.

An analogous technique may be used for debiting a cost value from an electronic purse device containing credit in one of the acceptable alternate currencies. The device should be debited the higher nearest multiple of the minimum increment implemented on the device based on the item cost converted to a value in the corresponding alternate currency. For example, if an electronic purse device containing a CAN $2.00 credit was inserted into the card acceptor 70 and a US $1.25 product was selected, the conversion of the US $1.25 cost would be CAN $1.57, assuming an exchange rate of 0.794 US/CAN. Therefore, if the minimum denomination of the device was CAN $0.05, the amount debited from the device would be the nearest higher multiple of the minimum increment, or CAN $1.60 (32 x 0.05).

A suitable equation to determine the amount to debit in such an instance is

$$DEBIT = RNDUP\left\{\frac{COST}{(xrate \times cardInc)}\right\} \times cardInc,$$

where the value DEBIT is the resulting amount to be debited from the device and the value cardInc is the minimum currency increment implemented on the card. The function RNDUP{x} rounds a value x to the next higher integer if the value x in not an integer. This function will not perform any rounding if the value x is an integer. Therefore, in the above example, the amount debited from the device would be DEBIT = RNDUP{1.25/(0.794 x 0.05)} x 0.05 = RNDUP {31.49} x 0.05 = 32 x 0.05 = CAN $1.60. In an alternative embodiment, the function RNDUP{} may be substituted with a function INT{} which would produce a system that may yield a reduced profit per transaction.

No conversion is typically required for debit and credit cards as this function is normally performed by the credit or debit card provider. However, if the conversion is not performed by the credit card provider, the system 1 may perform a simple multiplication conversion and charge the cards accordingly.

The method 500 provides an advantage to customers by summing the amounts of the deposited denominations of the first and alternate currencies, in steps 555 and 558, respectively, before converting to base currency units, in steps 556 and 560. This method is beneficial to the customer as two CAN $1.00 bills would be converted in an equivalent manner to a CAN $2.00 bill as opposed to converting each bill individually. For example, a CAN $2.00 bill would be converted to US $1.55, using the conversion formula recited above with an exchange rate of 0.794 US/CAN and a minimum base currency increment of US $0.05. In comparison, a CAN $1.00 bill would be converted to US $0.75 using the same formula and values. Therefore, unless the inserted amounts are first summed in step 555, the customer inserting two CAN $1.00 bills would obtain a credit of only US $1.50 (0.75 + 0.75), as opposed to US $1.55 for the CAN $2.00 bill. Although, it may produce a less advantageous exchange to the customer, steps 555 and 558 may be combined with respective steps 556 and 560 to convert each deposited acceptable alternate currency denomination prior to summing in establishing the credit value.

The method 500 of FIGS. 6 and 7 demonstrates a transaction system 1 that accepts three currencies, in other words, the base currency and the first and second alternate currencies for exemplary purposes only. The present invention may accommodate any number of currencies by adding similar summation and conversion steps, such as the steps 555 and 556, and 558 and 560, and by modifying steps 545 and 565 accordingly.

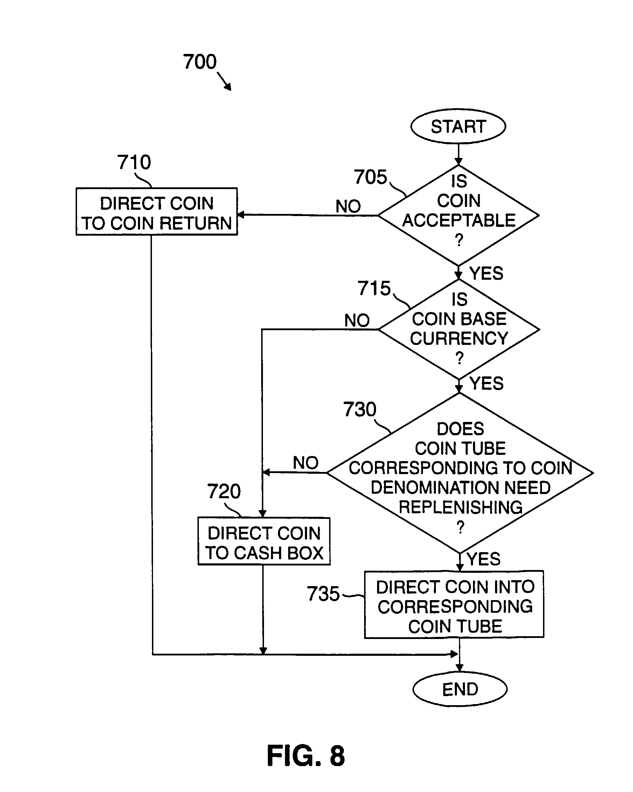

The coin mechanism 110 utilizes replenishable coin tubes 262-266, shown in FIG. 3, so that change may be paid from coins that were deposited in previous transactions. The processor 230, shown in FIG. 3, controls the routing of deposited coins through the coin mechanism 110 to the coin tubes 262-266 or the cashbox 120 based on a routing method, such as the routing method 700 of FIG. 8. Referring to FIG. 8, in step 705, the processor 230 determines if a deposited coin is an acceptable currency denomination. If the deposited coin is not acceptable, the method 700 proceeds to step 710 where the processor 230 causes the coin mechanism gate 235, shown in FIG. 3, to divert the coin to the reject chute 240 leading to the coin return 80. However, if the coin is identified as acceptable in step 705, the processor 230 operates the gate 235 to direct the coin to the coin separator 205.

Then, in step 715, if the coin is an acceptable coin of an alternate currency, the method 700 proceeds to step 720. In step 720, the processor 230 causes the coin separator gates 245-249, shown in FIG. 3, to route the coin to the path 258 leading to the cash box 120. In the alternative, if in step 715, the acceptable coin is part of the base currency coin set, the method 700 proceeds to step 730. In step 730, the processor 230 determines if a coin tube 262, 264 or 266 corresponding to the coin's denomination needs replenishing.

The processor 230 may keep a running total of the coins maintained in the coin tubes 262-266, or it may utilize sensors or other means to determine whether a tube needs replenishing. If no corresponding coin tube exists for that coin denomination, or if the corresponding coin tube does not need replenishing, the method 700 proceeds to step 720 where the coin is routed to the cash box 120. However, if the corresponding coin tube needs replenishing, the method proceeds to step 735 where the processor 230 operates one of the gates 262, 264 or 266 to route the coin to the proper coin tube.

The bill validator 100 of FIG. 2 operates in a similar manner to the coin mechanism 110 in that the processor 340, shown in FIG. 4, relies on information contained in the signals generated by the sensors 324 and 330, also shown in FIG. 4, to determine the acceptance of an inserted bill. If a bill is unacceptable, the processor 340 reverses the motor 314 and returns the bill to the customer. However, if the bill is acceptable, the bill is routed by a suitable bill diverting device to the bill stacker 105 or to the bill escrow and payout unit 115. Bills of particular base currency denominations that are used for change may be routed to the bill escrow and payout unit.

If the currencies accepted by the automatic transaction system 1 generally experience small changes in their relative values, then the exchange rates need not be updated on a daily basis. The exchange rates would generally be set to rates which are sufficient to offset any reconversion and handling costs after collection of the foreign currencies. Therefore, additional income could be realized by the system owner in the reconversion and handling costs for providing these added services. Further simplification of the conversion and change making process may be obtained by rounding the exchange rates up to the nearest increment of the base currency accepted by the system 1. For example, if the ratio between the base and first alternate currency was 1 : 1.28 and the minimum increment of base currency accepted by the system was 0.05, then the first alternate currency exchange rate may be rounded up to 1 : 1.30 accordingly.

In an alternative embodiment, the conversion of deposited alternate currency to credit values in base currency units in the present invention may be performed by the controllers of the currency acceptors employed in the transaction system, such as the processors 230 and 340 in the coin mechanism 110 and bill validator 100, respectively. In such an embodiment, the processors 230 and 340 would provide corresponding credit values in base currency units to the vend controller microprocessor 400. The credit values corresponding to deposited alternate currency may be provided to the microprocessor 400 for each accepted denomination separately or in a summed aggregate manner.

In another alternative embodiment, the currency conversion and control operations performed by the vend controller microprocessor 400 described above with respect to FIGS. 5-7 may alternatively be performed by a currency acceptor controller, such as the coin mechanism processor 230. For example, such a coin mechanism processor would receive the necessary information from the other currency acceptors to determine the credit value in base currency units of the deposited coins, bills and electronic purse devices. The coin mechanism processor would then provide the credit value to the vend controller which would vend the selected item if the credit was equal to, or exceeded, the item's cost.

Alternatively, such a coin mechanism processor may also determine if sufficient credit has been entered, and generate a vend signal to the vend controller. The vend signal indicates that sufficient credit has been entered, and that the vend controller should dispense a selected item. Such a coin mechanism may be used in a transaction system employing an industry standard vending machine interface, such as the "Single Price" or "4 Price" interfaces or the "Executive interface". These standard interfaces facilitate the use of vend controllers of limited computational abilities. In such systems, entry or updating of the exchange rate may be set in the manner described above with respect to FIG. 5, or by data entry devices, such as DIP switches, directly connected to the currency acceptor controller performing the conversion operation. Therefore, a system according to the present invention may be constructed using readily available components and interfaces with a suitably modified vend or currency acceptor controller.

In a further alternative embodiment, the automatic transaction system may utilize methods substantially similar to the method 500 of FIGS. 6 and 7 for maintaining credit in a reference currency while accepting payment in base and alternative currencies, and dispensing change in the base currency. The reference currency may be an accepted currency of a corresponding country or region, or may be specific independent currency units established by a transaction system owner or vend goods supplier.

In such an alternative automatic transaction system, each deposited denomination of base and alternative currencies are converted to credit values in the reference currency. One suitable conversion method determines the reference currency value by applying a respective conversion rate to accepted deposited base or alternate currencies. Any change due after a transaction may be calculated and dispensed according to the change dispensing method described above with respect to step 605 in FIG. 7. However, a step of converting the reference currency credit of the overpayment to a base currency value should be included in the change dispensing method to facilitate the paying out of change in the base currency.

Although several embodiments of the multiple currency automatic transaction machine have been described above, it would be readily understood by those having ordinary skill in the art that many modifications are possible in the described embodiments without departing from the teachings of the present claims. For instance, although the transaction system 1 of FIGS. 1 and 2 has three currency acceptors, i.e., a bill validator 100, a coin mechanism 110, and a card acceptor 70, any number or combination of currency acceptors that are capable of validating any number of different currencies may be employed in a system according to the present invention.

## Claims

1.  A currency handling apparatus for use with a multiple currency automatic transaction system for dispensing a plurality of items at a plurality of different respective prices, which system comprises an item selector (90) for selecting an item of a predetermined price and an item dispenser (410) for dispensing a selected item,
        the currency handling apparatus comprising:

    a currency validator (100, 110) operable to determine the acceptability of denominations of a base currency and denominations of at least one alternative currency;
    at least one change payout device (110) for paying out change in denominations of the base currency; and
    control means (130) responsive to the currency validator (100, 110) and the item selector (90) for controlling the change payout device (110) and causing the item dispenser (410) to dispense items, characterised in that the control means is capable of handling a vend transaction involving payment in at least two different currencies and being operable to (a) determine a credit value which is the sum of (i) the amounts of deposited base currency and (ii) the amounts of deposited alternative currency converted into the base currency by applying a predetermined conversion rate and rounding the resulting value so that it is an integer multiple of a predetermined denomination of the base currency, which is the smallest denomination payable by the change payout device; (b) calculate the difference between the price of the selected item and the credit amount and to issue a dispense signal if the credit amount equals or exceeds the selected item's price, and (c) issue signals to issue change corresponding to the difference between the selected item's price and the credit amount.

2.  The apparatus as claimed in claim 1 wherein, for a transaction where payment includes depositing a plurality of currency units in the alternative currency, the value of each acceptable currency unit in the alternative currency is converted to a value in the base currency and rounded before summing.

3.  The apparatus as claimed in claim 1 wherein, for a transaction where payment includes depositing a plurality of currency units in the alternative currency, the total value in the alternative currency is calculated, then converted to a value in the base currency.

4.  The apparatus as claimed in any preceding claim wherein said predetermined denomination of the base currency is the minimum denomination of the base currency accepted by the apparatus.

5.  The apparatus as claimed in any preceding claim wherein the currency validator comprises a coin mechanism (110), the coin mechanism (110) having at least one replenishable coin container (262, 264, 266) for base currency coin denominations, a coin dispenser (270) connected to the coin container for paying out change in the base currency, and wherein the coin mechanism (110) directs base currency coins to a corresponding one of the coin containers (262, 264, 266) and directs all other acceptable coins to a cash box (120).

6.  The apparatus as claimed in any preceding claim wherein the currency validator comprises a bill validator (110).

7. A multiple currency automatic transaction system for dispensing a plurality of items at a plurality of different prices, the system comprising:

an item selector (90) for selecting an item of a predetermined price; an item dispenser (410) for dispensing a selected item, and a currency handling apparatus as claimed in any preceding claim.

8. A method of performing a transaction using a multiple currency automatic transaction system, the method comprising:

determining whether deposited currency units in at least a base currency and an alternative currency are acceptable;

determining a credit value which is the sum of (i) the amounts of deposited base currency and (ii) the amounts of deposited alternative currency converted into the base currency by applying a predetermined conversion rate and rounding the resulting value so that it is an integer multiple of a predetermined denomination of the base currency, which is the smallest denomination made available for change;

permitting selection of one of a plurality of items, each associated with a respective stored price;

calculating the difference between the stored price of the selected item and the credit amount and issuing a dispense signal if the credit amount equals or exceeds the selected item's price;

and issuing signals to issue change in the base currency corresponding to the difference between the selected item's price and the credit amount.

## Patentansprüche

1. Geldhandhabungsvorrichtung zur Verwendung mit einem automatischen Mehrfachwährungs-Transaktionssystem zur Abgabe mehrerer Gegenstände entsprechend verschiedener Preise, wobei das System einen Gegenstandswähler (90) zur Auswahl eines Gegenstands eines vorbestimmten Preises und eine Gegenstandsabgabeeinrichtung (410) zur Abgabe eines gewählten Gegenstands aufweist,

wobei die Geldhandhabungsvorrichtung aufweist:

einen Geldprüfer (100, 110) zur Bestimmung der Annehmbarkeit von Werteinheiten einer Grundwährung und Werteinheiten mindestens einer Alternativwährung,

mindestens ein Wechselgeld-Auszahlgerät (110) zum Auszahlen von Wechselgeld in Werteinheiten der Grundwährung, und

eine Steuereinrichtung (130), die auf den Geldprüfer (100, 110) und den Gegenstandswähler (90) anspricht, um das Wechselgeld-Auszahlgerät (110) zu steuern und die Gegenstandsabgabeeinrichtung (410) zur Abgabe von Gegenständen zu veranlassen,

dadurch **gekennzeichnet**, daß die Steuereinrichtung eine Verkaufstransaktion unter Zahlung in mindestens zwei verschiedenen Währungen handhaben kann und (a) einen Guthabenwert bestimmen kann, der die Summe darstellt aus (i) den Werten an eingegebener Grundwährung und (ii) den Werten an eingegebener Alternativwährung, die mittels eines vorgegebenen Umwandlungsverhältnisses und Runden des resultierenden Werts, so daß er ein ganzzahliges Vielfaches einer vorbestimmten kleinsten von dem Wechselgeld-Auszahlgerät zahlbaren Werteinheit der Grundwährung ist, in die Grundwährung umgewandelt ist, (b) die Differenz zwischen dem Preis des gewählten Gegenstands und dem Guthabenwert berechnen und ein Abgabesignal ausgeben kann, wenn der Guthabenwert gleich oder höher dem Preis des gewählten Gegenstands ist, und (c) Signale zur Ausgabe von Wechselgeld entsprechend der Differenz zwischen dem Preis des gewählten Gegenstands und dem Guthabenwert ausgeben kann.

2. Vorrichtung nach Anspruch 1, wobei der Wert jeder annehmbaren Geldeinheit in der Alternativwährung in einen Wert der Grundwährung umgewandelt und vor einer Summierung gerundet wird, wenn eine Zahlung bei einer Transaktion die Eingabe mehrerer Geldeinheiten in der Alternativwährung beinhaltet.

3. Vorrichtung nach Anspruch 1, wobei der Gesamtwert in der Alternativwährung berechnet und dann in einen Wert in der Grundwährung umgewandelt wird, wenn die Zahlung bei einer Transaktion die Eingabe mehrerer Geldeinheiten in der Alternativwährung beinhaltet.

4. Vorrichtung nach einem der vorhergehenden Ansprüche, wobei die vorbestimmte Werteinheit der Grundwährung die minimale Werteinheit der Grundwährung, die von der Vorrichtung angenommen wird, ist.

**5.** Vorrichtung nach einem der vorhergehenden Ansprüche, wobei der Geldprüfer einen Münzmechanismus (110) mit mindestens einem nachfüllbaren Münzbehälter (262, 264, 266) für Münzeinheiten der Grundwährung, und eine mit dem Münzbehälter verbundene Münzabgabeeinrichtung (270) zur Auszahlung von Wechselgeld in der Grundwährung beinhaltet und wobei der Münzmechanismus (110) Münzen der Grundwährung zu einem entsprechenden der Münzbehälter (262, 264, 266) und alle anderen annehmbaren Münzen zu einem Kassenkasten (120) leitet.

**6.** Vorrichtung nach einem der vorhergehenden Ansprüche, wobei der Geldprüfer einen Banknotenprüfer (110) beinhaltet.

**7.** Automatisches Transaktionssystem für mehrere Währungen zur Abgabe mehrerer Gegenstände verschiedener Preise, aufweisend:

einen Gegenstandswähler (90) zum Wählen eines Gegenstands eines vorbestimmten Preises, eine Gegenstandsabgabeeinrichtung (410) zur Abgabe eines gewählten Gegenstands und eine Geldhandhabungsvorrichtung nach einem der vorhergehenden Ansprüche.

**8.** Verfahren zur Durchführung einer Transaktion unter Verwendung eines automatischen Transaktionssystems für mehrere Währungen, mit folgenden Schritten:

Bestimmen, ob eingegebene Geldeinheiten in mindestens einer Grundwährung und einer Alternativwährung annehmbar sind,

Bestimmen eines Guthabenwerts, der die Summe darstellt aus (i) den Werten an eingegebener Grundwährung und (ii) den Werten an eingegebener Alternativwährung, die mittels eines vorgegebenen Umwandlungsverhältnisses und Runden des resultierenden Werts, so daß er ein ganzzahliges Vielfaches einer vorbestimmten kleinsten als Wechselgeld verfügbar gemachten Werteinheit der Grundwährung ist, in die Grundwährung umgewandelt ist,

Erlauben einer Auswahl eines von mehreren Gegenständen, denen jeweils ein entsprechender gespeicherter Preis zugeordnet ist,

Berechnen der Differenz zwischen dem gespeicherten Preis des gewählten Gegenstands und dem Guthabenwert und Ausgeben eines Abgabesignals, wenn der Guthabenwert gleich oder größer als der Preis des gewählten Gegenstands ist, und

Ausgeben eines Signals zur Abgabe von Wechselgeld in der Grundwährung entsprechend der Differenz zwischen dem Preis des gewählten Gegenstands und dem Guthabenwert.

## Revendications

**1.** Un appareil de traitement de numéraires à utiliser dans un système de transactions automatiques à numéraires multiples ou, en d'autres termes, à unités monétaires multiples, pour distribuer une série d'articles à une série de prix respectifs différents, le système comprenant un sélecteur (90) d'articles pour sélectionner un article d'un prix déterminé et un distributeur (410) d'articles pour distribuer un article sélectionné,

l'appareil de traitement de numéraires comprenant:

un validateur (100, 110) de numéraires qui peut intervenir pour déterminer l'acceptabilité de dénominations d'un numéraire de base et de dénominations d'au moins une variante de numéraire;

au moins un dispositif (110) de restitution de monnaie pour restituer de la monnaie en dénominations du numéraire de base; et

un moyen de commande (130) qui répond au validateur (100, 110) de numéraires et au sélectionneur (90) d'articles pour commander le dispositif (110) de restitution de monnaie et amener le distributeur (410) d'articles à distribuer des articles, caractérisé en ce que le moyen de commande peut traiter une transaction de fourniture impliquant un paiement dans au moins deux numéraires différents et intervenir pour (a) déterminer une valeur de crédit qui est la somme de (i) les montants déposés en numéraire de base et (ii) les montants déposés en variantes de numéraires et convertis en numéraire de base en appliquant un taux de conversion prédéterminé et en arrondissant la valeur résultante de façon qu'elle soit un multiple entier d'une dénomination prédéterminée du numéraire de base, qui est la plus petite dénomination payable par le dispositif de restitution de monnaie; (b) calculer la différence entre le prix de l'article sélectionné et le montant du crédit et envoyer un signal de distribution si le montant du crédit est égal au prix de l'article sélectionné ou le dépasse, et (c) envoyer des signaux de restitution de monnaie correspondant à la différence entre le prix de l'article sélectionné et le montant du crédit.

**2.** L'appareil selon la revendication 1, dans lequel la valeur de chaque unité de numéraire acceptable de la variante de numéraire est convertie en une valeur en numéraire de base et est arrondie avant sommation, pour une transaction dans laquelle un paiement inclut le dépôt d'une série d'unités de numéraire dans la variante de numéraire.

**3.** L'appareil selon la revendication 1, dans lequel la valeur totale de la variante de numéraire est calculée, puis convertie en une valeur en numéraire de base, pour une transaction dans laquelle un paiement inclut le dépôt d'une série d'unités de numéraire dans la variante de numéraire.

**4.** L'appareil selon l'une quelconque des revendications précédentes dans lequel ladite dénomination prédéterminée de numéraire de base est la dénomination minimale de numéraire de base acceptée par l'appareil.

**5.** L'appareil selon l'une quelconque des revendications précédentes dans lequel le validateur de numéraires comprend un mécanisme de monnayeur (110), le mécanisme de monnayeur (110) incluant au moins une cassette (262, 264, 266) de pièces qui peut être réapprovisionnée en dénominations de pièces du numéraire de base, un distributeur (270) de pièces connecté à la cassette de pièces pour restituer de la monnaie en numéraire de base, et dans lequel le mécanisme de monnayeur (110) dirige des pièces du numéraire de base vers l'une des cassettes correspondantes (262, 264, 266) de pièces et dirige toutes les autres pièces acceptables vers un coffret (120) d'espèces.

**6.** L'appareil selon l'une quelconque des revendications précédentes, dans lequel le validateur de numéraires comprend un validateur (110) de billets.

**7.** Un système de transactions automatiques à numéraires multiples pour distribuer une série d'articles à une série de prix différents, le système comprenant:

un sélecteur (90) d'articles pour sélectionner un article d'un prix prédéterminé; un distributeur (410) d'articles pour distribuer un article sélectionné, et un appareil de traitement de numéraires conforme à l'une quelconque des revendications précédentes.

**8.** Un procédé de mise en oeuvre d'une transaction qui utilise un système de transactions automatiques à numéraires multiples, le procédé comprenant les étapes consistant à:

déterminer si des unités de numéraires déposées dans au moins un numéraire de base et une variante de numéraire sont acceptables;
déterminer une valeur de crédit qui est la somme de (i) les montants déposés en numéraire de base et (ii) les montants déposés en variante de numéraire convertis en numéraire de base en appliquant un taux de conversion prédéterminé et en arrondissant la valeur résultante de façon à ce qu'elle soit un multiple entier d'une dénomination prédéterminée du numéraire de base, qui est la plus petite dénomination disponible pour la monnaie;
permettre une sélection d'un article d'une série, chaque article étant associé à un prix respectif mémorisé;
calculer la différence entre le prix mémorisé de l'article sélectionné et le montant du crédit, et envoyer un signal de distribution si le montant de crédit est égal au prix de l'article sélectionné ou le dépasse; et
envoyer des signaux afin d'envoyer de la monnaie, en numéraire de base, correspondant à la différence entre le prix de l'article sélectionné et le montant du crédit.

**FIG. 1**

FIG. 2

**FIG. 3**

**FIG. 4**

EP 0 796 478 B1

**FIG. 5**

EP 0 796 478 B1

# FIG. 6

500

START

501 — INITIALIZE
CREDIT = 0  T1 = 0
CONV1 = 0  T2 = 0
CONV2 = 0  T3 = 0

505 — IS COIN/BILL/CARD ENTERED ?  →NO

YES

510 — DISCRIMINATE COIN/BILL, READ CARD

515 — IS CREDIT/DEBIT CARD ?  →YES→ 520 COST = COST OF SELECTED ITEM IN BASE CURRENCY - CREDIT

NO

535 — CURR = CURRENCY TYPE

525 — PERFORM AUTHORIZATION

540 — DENOM = DENOMINATION OF ENTERED COIN/BILL OR AMOUNT ON ELECTRONIC PURSE DEVICE

530 — PERFORM TRANSACTION IN BASE CURRENCY AND VEND ITEM

545 — IF CURR =

| SECOND ALTERNATE CURRENCY | FIRST ALTERNATE CURRENCY | BASE CURRENCY |

558

T3 = T3 + DENOM

T2 = T2 + DENOM

550 — T1 = T1 + DENOM

CONV2 = CONVERT T3 TO BASE CURRENCY

CONV1 = CONVERT T2 TO BASE CURRENCY — 555

— 556

560

Ⓐ TO FIG. 7

Ⓑ TO FIG. 7

Ⓒ FROM FIG. 7

**FIG. 7**

700

710

DIRECT COIN
TO COIN RETURN

705

IS
COIN
ACCEPTABLE
?

NO

YES

715

IS
COIN BASE
CURRENCY
?

NO

YES

730

DOES
COIN TUBE
CORRESPONDING TO COIN
DENOMINATION NEED
REPLENISHING
?

NO

720

DIRECT COIN
TO CASH BOX

YES

735

DIRECT COIN INTO
CORRESPONDING
COIN TUBE

START

END

**FIG. 8**